# FASCICULE DE BREVET EUROPEEN

(11) **EP 2 726 806 B1**
(45) Date de publication et mention de la délivrance du brevet: **22.04.2015**
(21) Numéro de dépôt: 12733641.0
(22) Date de dépôt: 28.06.2012
(51) Int. Cl.: F28D 9/00, F02B 29/04

(54) **BOITIER D'ECHANGEUR A PLAQUES EMPILEES ET ECHANGEUR COMPRENANT UN TEL BOITIER**
GESTAPELTER PLATTENWÄRMETAUSCHERGEHÄUSE UND WÄRMETAUSCHER MIT EINEM SOLCHEN GEHÄUSE
STACKED PLATE EXCHANGER CASING AND EXCHANGER COMPRISING SUCH A CASING

(30) Priorité: 30.06.2011 FR 1102056
(43) Date de publication de la demande: 07.05.2014
(73) Titulaire: Valeo Systemes Thermiques, 78321 Le Mesnil-Saint-Denis (FR)
(72) Inventeur: MARTINS, Carlos, F-78150 Le Chesnay (FR)
(74) Mandataire: Metz, Gaëlle
(86) Numéro de dépôt international: PCT/EP2012/062590
(87) Numéro de publication internationale: WO 2013/001017

(56) Documents cités:
- EP-A1- 1 930 681
- EP-A1- 1 983 171
- WO-A1-2009/156365
- FR-A1- 2 855 605
- FR-A1- 2 906 017

## Description

La présente invention concerne un boîtier d'échangeur à plaques empilées tel que défini par le préambule de la revendication 1 et un échangeur comprenant un tel boîtier. Un tel échangeur est divulgué par le document FR 2855605.

L'invention s'applique à tout type d'échangeurs de chaleur, notamment pour véhicule automobile, comme par exemple des échangeurs destinés à être montés dans le compartiment moteur du véhicule tels que des refroidisseurs d'air de suralimentation (RAS).

Dans ce domaine, il est connu des échangeurs de chaleur comprenant une série de plaques empilées formant des surfaces d'échange de chaleur, entre lesquelles un fluide à refroidir et un fluide de refroidissement circulent, en couches alternées, dans des circuits de passage des fluides.

Lors du montage de l'échangeur, il est connu de positionner l'empilement de plaques sur un fond du boîtier et de positionner un couvercle sur l'empilement de plaque avant de braser l'ensemble dans un four de brasage. Afin de permettre la solidarisation des plaques, celles-ci sont revêtues d'un placage de brasage. Lors de l'opération de brasage le plaquage fond, réduisant ainsi la hauteur de l'empilement de plaques. On appelle cette réduction de hauteur le foisonnement des plaques. Le couvercle est ainsi amené à se déplacer vers le fond selon la direction d'empilement des plaques et la hauteur entre le fond du boîtier et le couvercle du boîtier est destinée à diminuer.

Par ailleurs, pour collecter le fluide à refroidir, il est connu d'utiliser une boite collectrice d'entrée et/ou une boite collectrice de sortie. Ces boites collectrices sont fixées sur les cotés du boîtier, en particulier sur une partie du fond et sur une partie du couvercle du boîtier.

Une difficulté rencontrée pour la fixation des boites collectrices vient du fait que la position relative du couvercle par rapport au fond dépend du brasage et du foisonnement des plaques empilées. Il est ainsi difficile de maîtriser précisément l'interface entre les boites collectrices et le boîtier puisqu'il dépend du positionnement relatif du couvercle et du fond du boîtier. Cela pose des problèmes notamment pour l'assemblage de l'échangeur, problèmes qui peuvent aller jusqu'à entraîner des défauts d'étanchéité.

Le but de l'invention est de remédier aux problèmes précités.

Elle propose pour cela un boîtier d'échangeur à plaques empilées selon la revendication 1.

Ainsi, grâce à l'invention, l'interface destinée à recevoir la boite collectrice est définie par une partie du boîtier insensible au foisonnement. Elle ne dépend donc plus de l'opération de brasage et des épaisseurs de placage employées. De cette manière, il est possible de prévoir exactement la position de l'interface sur le boîtier quelque soit le foisonnement qui a lieu lors de l'opération de brasage et on peut ainsi améliorer la reproductibilité du positionnement de la ou des boites collectrices sur le boîtier. On dispose ainsi d'une interface continue.

Selon un aspect de l'invention, ladite deuxième partie possède deux dits flancs relevés, appelés premier et deuxième flancs relevés, l'interface définie par le premier flanc, dite première interface, étant apte à recevoir une boite collectrice d'entrée du fluide à refroidir et l'interface définie par le deuxième flanc, dite deuxième interface, étant apte à recevoir une boite collectrice de sortie du fluide à refroidir.

Selon un autre aspect de l'invention, la deuxième partie comprend un fond destiné à se trouver en vis-à-vis d'une plaque d'extrémité de la pluralité de plaques empilées, le fond et le ou les flancs formant un ensemble unitaire.

Selon un exemple de réalisation, ladite interface définit un cadre au milieu duquel se situe une ouverture permettant au fluide à refroidir d'entrer et/ou de sortir du boîtier. De cette manière, l'ouverture située au milieu du cadre de la première interface permet au fluide d'entrée dans le boîtier et l'ouverture située au milieu du cadre de la deuxième interface permet au fluide de sortir du boîtier.

Selon un autre exemple de réalisation, le cadre est bordé d'un collet divergent vers l'intérieur du boîtier, délimitant l'ouverture et apte à coopérer avec la boite collectrice du fluide à refroidir. Le collet fait saillie par rapport à l'interface et est destiné à pénétrer à l'intérieur de la boite collectrice.

Selon un aspect de l'invention, une portion du collet est en contact avec une extrémité latérale du fond de la deuxième partie. De cette manière, l'ouverture est apte à laisser passer le fluide à refroidir entre toutes les plaques de l'empilement, y compris entre la plaque d'extrémité située contre le fond du boîtier et une plaque adjacente à celle-ci.

Selon un autre aspect de l'invention, la première partie comprend deux parois latérales et une paroi supérieure. Les deux parois latérales et la paroi supérieure forment, par exemple, un ensemble unitaire, notamment obtenu par pliage et/ou emboutissage d'une tôle métallique. Le volume interne est ainsi délimité par le fond et le ou les flancs de la deuxième partie, et les parois latérales et la paroi supérieure de la première partie.

Selon un exemple de réalisation, la ou les parois latérales et/ou la paroi supérieure possèdent chacune un bord relevé au moins partiellement en contact avec une face du flanc dirigée vers l'intérieur du volume, dite face interne. Durant l'opération de brasage, le ou les bords relevés, solidaire de la première partie, peuvent ainsi se déplacer dans le sens de l'empilement des plaques, contre la face interne du flanc et se solidariser à celle-ci à la suite du brasage.

Selon un autre exemple de réalisation, le bord relevé de la paroi supérieure relie ensemble les bords relevés des deux parois latérales. La première partie du boîtier comprend ainsi un bord relevé continu, au moins partiellement en contact avec la face interne du premier flanc et/ou la face interne du deuxième flanc.

Selon un aspect de l'invention le fond de la deuxième partie comprend une partie centrale et deux extrémités longitudinales définissant chacune un épaulement par rapport à la partie centrale, chaque épaulement permettant à une extrémité distale des parois latérales de la première partie de se trouver dans un plan s'étendant extérieurement au volume interne défini par le boîtier. Les extrémités distales des parois latérales sont, par exemple, munies elles aussi dudit bord relevé.

L'invention concerne aussi un échangeur de chaleur comprenant un boîtier tel que décrit précédemment et une pluralité de plaques empilées configurée pour la circulation d'un fluide à refroidir et d'un fluide de refroidissement, située dans ledit boîtier.

Selon un aspect de l'invention, chaque plaque possède une zone d'échange de chaleur destinée à favoriser l'échange de chaleur entre le fluide à refroidir et le fluide de refroidissement, et une zone de contournement susceptible de permettre au fluide à refroidir de contourner la zone d'échange de chaleur, une partie du ou desdits flancs relevés formant une ou plusieurs cloisons forçant une circulation du fluide à refroidir dans la zone d'échange.

Les figures annexées feront bien comprendre comment l'invention peut être réalisée. Sur ces figures, des références identiques désignent des éléments semblables.
La figure 1 est une vue en perspective éclatée d'un échangeur de chaleur à plaques empilées muni d'un boîtier conforme à l'invention et d'une pluralité de plaques empilées, située à l'intérieur du boîtier.
La figure 2 est une vue en perspective de l'échangeur de la figure 1 assemblé.
La figure 3 est une vue similaire à la vue de la figure 2 représentant l'échangeur et le boîtier muni de boites collectrices.
La figure 4 est une vue similaire à la figure 3 représentant une variante de réalisation.

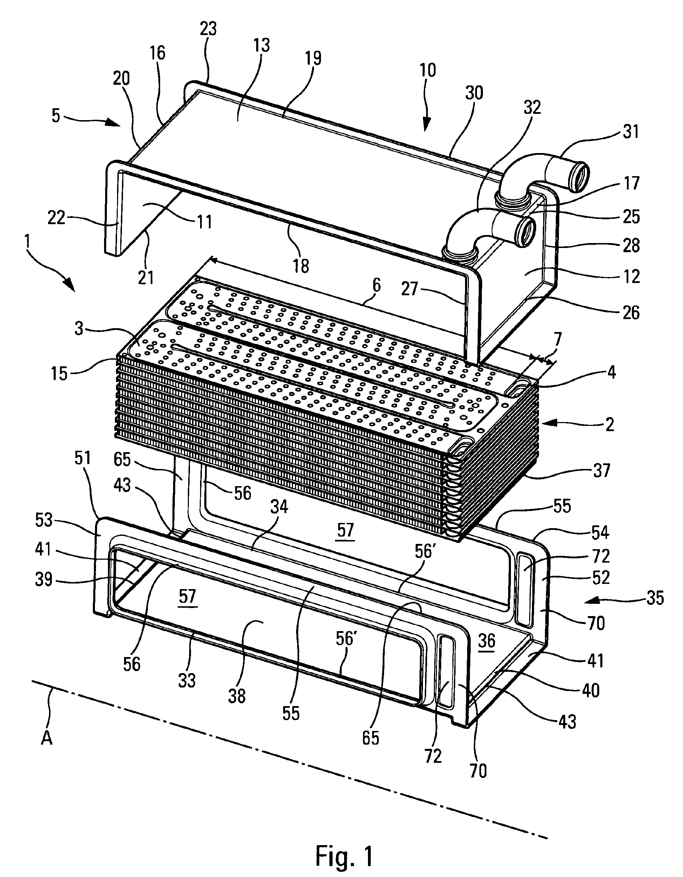

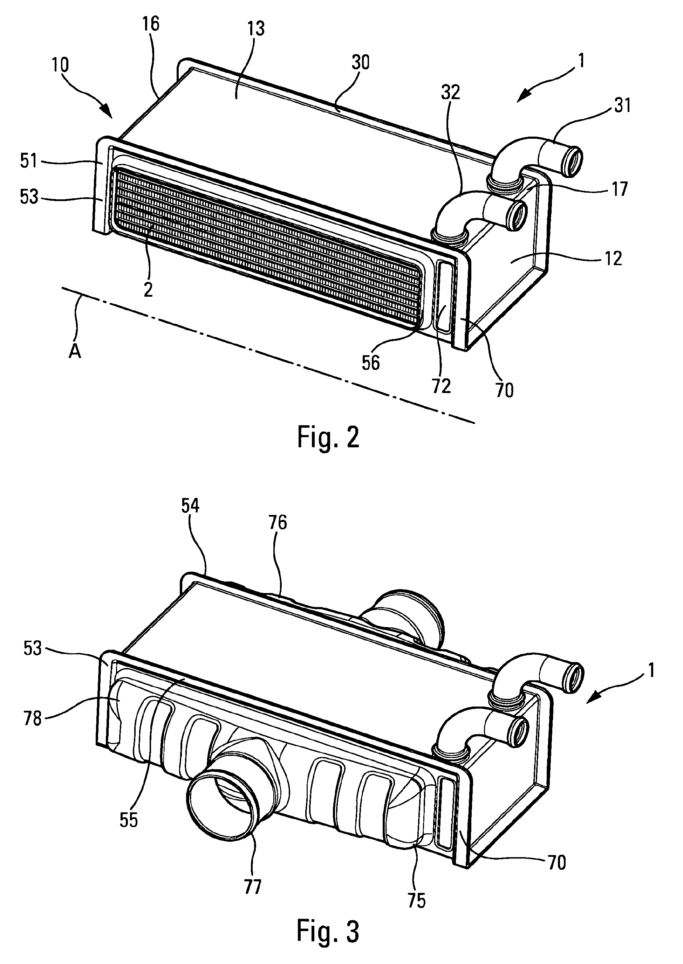

L'invention peut trouver son application dans un échangeur de chaleur 1 tel que représenté sur la figure 1 et 2. Cet échangeur 1 est, par exemple, un refroidisseur d'air de suralimentation (RAS) d'un système d'alimentation en gaz d'admission d'un moteur thermique pour véhicule automobile ou analogue. Dans ce genre d'échangeur de chaleur, le fluide à refroidir est par exemple, de l'air, comprimé par un turbo compresseur et destiné à l'alimentation du moteur du véhicule, et le fluide de refroidissement est notamment un liquide caloporteur.

L'échangeur 1 comprend une pluralité de plaques empilées 2 entre lesquelles circulent le fluide à refroidir et le fluide de refroidissement dans deux circuits indépendants définis par lesdites plaques 2, en couches alternées. Chaque plaque 2 est, par exemple, de forme sensiblement rectangulaire.

Chaque plaque 2 comporte un ici un canal 3, par exemple obtenu par emboutissage, définissant un circuit pour le fluide de refroidissement. Les plaques 2 sont disposées tête bêche, c'est-à-dire selon un plan de symétrie parallèle aux plans dans lesquels s'étendent les plaques 2. On appelle paire de plaque 2, deux plaques adjacentes dont les canaux 3 se font face de manière à définir le circuit de circulation du fluide de refroidissement. Le fluide à refroidir circule en revanche entre deux paires de plaques successives, c'est-à-dire entre deux plaques 2 adjacentes appartenant à deux paires de plaques successives. Des intercalaires 15 sont éventuellement prévus entre chaque paire de plaques 2 sur le circuit de passage du fluide à refroidir pour améliorer l'échange thermique entre les deux fluides.

Pour permettre au fluide de refroidissement de passer d'une paire de plaques 2 à une autre paire de plaques 2 adjacente, il est prévu au niveau d'une extrémité longitudinale de chaque plaque 2 un premier et un deuxième emboutis ouverts 4. Les emboutis ouverts 4 de deux plaques 2 adjacentes appartenant à des paires de plaque 2 différentes créent un canal permettant au fluide de passer d'une paire de plaque à l'autre, de manière étanche. Les premiers des deux emboutis ouverts de chaque plaques permettent au fluide de refroidissement de pénétrer à l'intérieur de chaque paire de plaques 2 alors que les deuxièmes des deux emboutis ouverts 4 de chaque plaque permettent au fluide de sortir de chaque paire de plaques 2 après avoir parcouru le circuit défini par le canal 3.

On peut ainsi délimiter deux zones dans la pluralité de plaques empilées 2. Une première zone, dite zone d'échange 6, est destinée à favoriser l'échange de chaleur entre les fluides et correspond à la zone où le fluide de refroidissement circule à l'intérieur de chaque paire de plaques 2. Une deuxième zone, dite zone de contournement 7, est susceptible de laisser le fluide à refroidir contourner la zone d'échange de chaleur et correspond à la zone où le fluide de refroidissement passe d'une paire de plaques à l'autre, c'est-à-dire la zone des plaques où se situent les emboutis ouverts 4.

Dans la suite de la description les références avant, arrière, haut, bas, droite et gauche sont définies par rapport au sens de circulation du fluide à refroidir dans l'échangeur.

Comme représenté aux figures 1 et 2, l'échangeur 1 comprend un boîtier 10 conforme à l'invention et délimitant un volume à l'intérieur duquel se trouve la pluralité de plaques 2. Un tel boîtier 10 est, notamment, de forme sensiblement parallélépipédique.

Ce boîtier 10 comprend une première partie 5 possédant une première paroi latérale 11 située sur un coté gauche de l'échangeur et s'étendant dans un plan perpendiculaire à un axe A d'extension longitudinale du boîtier, une deuxième paroi latérale 12 située sur un coté droit de l'échangeur et s'étendant dans un plan perpendiculaire à l'axe A et une paroi supérieure 13, reliant les deux parois latérales 11, 12 et s'étendant dans un plan perpendiculaires aux plans dans lesquels s'étendent les parois latérales 11, 12. Les parois latérales 11, 12 et la paroi supérieure 13 sont planes, sensiblement rectangulaire et forment un ensemble unitaire.

La paroi supérieure 13 comprend une première extrémité longitudinale 16 au niveau de laquelle naît la première paroi latérale 11 et une deuxième extrémité longitudinale 17 au niveau de laquelle naît la deuxième paroi latérale 12. Elle comprend également une première extrémité latérale 18 située vers l'avant du boîtier 10 et une deuxième extrémité latérale 19 vers l'arrière du boîtier 10.

La première paroi latérale 11 comprend une extrémité supérieure 20 au contact de la première extrémité longitudinale 16 de la paroi supérieure 13, une extrémité distale 21, une première extrémité latérale 22 située vers l'avant du boîtier 10 et une deuxième extrémité latérale 23 située vers l'arrière du boîtier 10. Les deux extrémité latérale 22, 23 relient l'extrémité supérieure 20 à l'extrémité distale 21.

De la même manière, la deuxième paroi latérale 12 comprend une extrémité supérieure 25 au contact de la deuxième extrémité longitudinale 17 de la paroi supérieure 13, une extrémité distale 26, une première extrémité latérale 27 située vers l'avant du boîtier 10 et une deuxième extrémité latérale 28 située vers l'arrière du boîtier 10. Les deux extrémités latérales 27, 28 relient l'extrémité supérieure 25 à l'extrémité distale 26.

La première paroi latérale 11 est munie d'un bord relevé 30. Il s'étend dans des plans perpendiculaires à l'arrête 16, 20 reliant la première paroi latérale 11 et la paroi supérieure 13. Le bord relevé 30 prend naissance au niveau des extrémités latérales 22, 23 et distales 21 de la première paroi latérale 11.

Le bord relevé 30 se poursuit sur la paroi supérieure 13 au niveau des extrémités latérales 18, 19 de la paroi supérieure 13. Il s'étend dans les mêmes plans que ceux définis au paragraphe précédent.

Le bord relevé 30 se prolonge également sur la deuxième paroi latérale 12 au niveau de ses extrémités latérales 27, 28 et distale 26 et s'étend toujours dans les mêmes plans que précédemment

Le bord relevé 30 est ainsi continu le long des premières et deuxièmes extrémités latérales des parois latérales et supérieures. Il peut également se poursuivre de manière continue le long des extrémités distales des parois latérales. Au niveau des extrémités distales des parois latérales, le bord relevé 30 s'étend, notamment, dans un plan parallèle au plan dans lequel s'étend la paroi supérieure 13.

Une tubulure d'entrée 31 du fluide de refroidissement et une tubulure de sortie 32 du fluide de refroidissement sont rapportées sur la paroi supérieure 13, notamment au niveau d'une zone proche de la deuxième extrémité longitudinale 17 de la paroi supérieure 13. Elles permettent au fluide de refroidissement d'entrer et de sortir de l'échangeur 1.

Le boîtier 10 comprend également une deuxième partie 35, définissant avec la première partie 5 le volume interne à l'intérieur duquel se situe la pluralité de plaques empilées 2.

Cette deuxième partie 35 comprend un fond 36, par exemple rectangulaire, possédant une partie centrale plane 38 destinée à être en contact avec une plaque d'extrémité 37 de la pluralité de plaques empilées 2. La partie centrale 38 du fond 36 possède une première extrémité longitudinale 39 située sur la gauche du boîtier 10 et une deuxième extrémité longitudinale 40 située sur la droite du boîtier 10. Le fond 36 comprend une première extrémité latérale 33 situé vers l'avant du boîtier 10 et une deuxième extrémité latérale 34 située vers l'arrière du boîtier 10.

Au niveau de la première extrémité longitudinale 39 se situe un épaulement 41. Cet épaulement 41 définit une zone de butée s'étendant dans un plan parallèle au plan dans lequel s'étend la partie centrale 38 à laquelle il est relié à celle-ci par l'intermédiaire d'une jupe 43 s'étendant dans un plan perpendiculaire aux plans dans lesquels s'étendent la partie centrale 38 et l'épaulement 41. L'épaulement 41 se trouve ainsi en vis-à-vis de l'extrémité distale 21 de la première paroi latérale 11. L'épaulement 41 est complémentaire de la partie du bord relevé 30 située au niveau de l'extrémité distale 21 de la première paroi latérale 11. Cet épaulement 41 se situe dans un plan extérieur au volume interne de sorte que l'extrémité distale 21 de la première paroi latérale 11 se situe en dessous du fond 36, une fois au contact de ladite zone de butée.

Il en est ici de même au niveau de la deuxième extrémité longitudinale 40.

La deuxième partie 35 du boîtier 10 comprend également au moins un flanc 51, 52 définissant une interface 53, 54 apte à recevoir une boite collectrice du fluide à refroidir (représenté sur la figure 3). Dans l'exemple illustré aux figures 1 et 2, la deuxième partie 35 comprend deux flancs, un premier flanc 51 situé vers l'avant du boîtier 10 et un deuxième flanc 52 situé vers l'arrière du boîtier 10. Le premier flanc 51 définit une première interface 53 apte à recevoir une boite collectrice d'entrée (référencée 75 à la figure 3) permettant au fluide à refroidir d'entrer dans le volume interne et le deuxième flanc 52 définit une deuxième interface 54 apte à recevoir une boite collectrice de sortie (référencée 76 à la figure 3) permettant au fluide de sortir du volume interne. Dans cet exemple particulier, le fond 36 et le ou les flancs 51, 52 forment un ensemble unitaire, par exemple obtenu par emboutissage et/ou pliage d'une tôle métallique.

Le premier flanc 51 prend naissance au niveau de la première extrémité latérale 33 du fond 36 et s'étend dans un plan perpendiculaire au plan dans lequel s'étend la partie centrale 38.

La première interface 53 comprend un cadre 55 sensiblement rectangulaire, à la périphérie interne duquel se situe un collet 56 en saillie par rapport au cadre et situé à l'extérieur du volume interne. Le collet 56 est de forme divergente vers le volume interne. Il délimite une ouverture 57 par laquelle le fluide à refroidir est apte à entrer dans le volume interne et en particulier dans le circuit de circulation du fluide à refroidir défini par la pluralité de plaques empilées 2.

Le collet 56 et le cadre 55 sont aptes à coopérer avec la boite collectrice d'entrée du fluide à refroidir. En particulier, le cadre 55 est destiné à être en contact avec la boite collectrice d'entrée alors que le collet 56 est destiné à pénétrer à l'intérieur de la boite collectrice d'entrée.

Le collet 56 suit un contour sensiblement rectangulaire. Il est de section arrondi et une portion 56' du collet 56 est tangente au fond 36. En particulier la portion 56' du collet 56 est en contact avec la première extrémité latérale 33 du fond 36 de la deuxième partie 35.

Le premier flanc 51 possède une face interne 65, opposée à la première interface 53 et dirigée vers l'intérieur du volume interne. Ladite face interne 65 est en contact avec le bord relevé 30.

On renforce de la sorte le guidage de la première partie 5 sur la seconde partie 35 lors du brasage de l'échangeur et le foisonnement des plaques. On renforce également la qualité du brasage des deux parties l'une sur l'autre et l'étanchéité du boîtier.

Du coté de la deuxième paroi latérale 12 de la première partie 5, le premier flanc 51 possède une cloison 70 forçant une circulation du fluide à refroidir dans la zone d'échange 6. Autrement dit, le premier flanc 51 comprend une cloison 70 située sur le cadre 55 en vis-à-vis de la zone de contournement 7 du fluide. De cette manière, l'ouverture 57 se situe en face de la zone d'échange 6 et la cloison 70 en face de la zone de contournement 7 de sorte que le fluide à refroidir qui entre dans le volume interne est guidé dans la zone d'échange.

La cloison 70 possède un embouti 72 dirigé vers le volume interne et permettant d'assurer le contact entre la cloison 70 et les plaques 2 au niveau de la zone de contournement 7.

Le premier flanc 51 et le deuxième flanc 52 sont ici symétriques par rapport à un plan médian longitudinale du boîtier 10 de sorte qu'ils possèdent les mêmes caractéristiques.

La figure 3 illustre l'échangeur de chaleur 1 muni d'une boite collectrice d'entrée 75 en contact avec la première interface 53 et une boite collectrice de sortie 76 de forme identique à la boite collectrice d'entrée 75 et en contact avec la deuxième interface 54, comme expliqué précédemment.

La boite collectrice d'entrée et/ou de sortie possède ici un raccord 77 permettant de la connecter à des tubulures indépendantes de l'échangeur, le raccord 77 étant notamment situé au milieu de la boite. Une telle boite 75, 76 possède une paroi 78 qui définit un volume avec l'interface 53, 54 sur laquelle la boite est rapportée, le volume étant ouvert sur l'ouverture de ladite interface et permettant de collecter le fluide et/ou de le distribuer dans l'échangeur 1. Une face interne de la paroi 78 de cette boite collectrice est ainsi en contact avec le collet et/ou le cadre 55 de l'interface 53, 54 sur laquelle la boite est rapportée. Le collet peut ainsi pénétrer à l'intérieur du volume défini par la boite collectrice. Les cloisons 70 sont ici libres et ne sont pas recouvertes par les boites collectrices 75, 76.

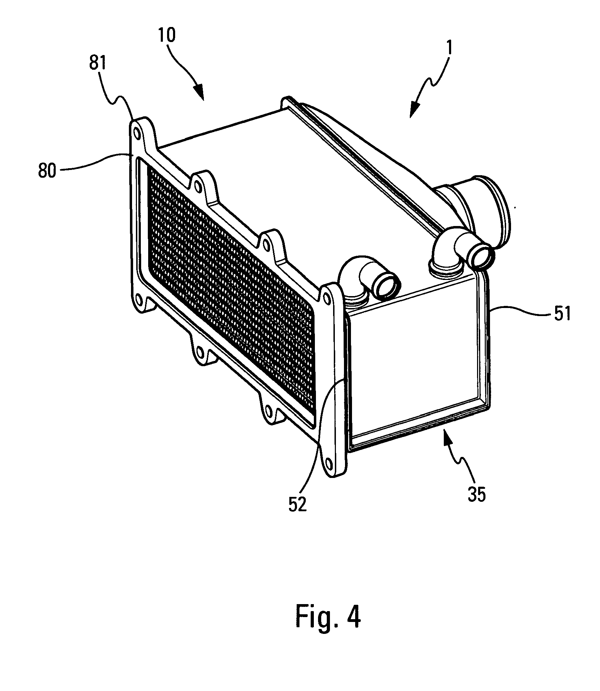

La figure 4 représente une variante de réalisation selon laquelle sur un des deux flancs 51, 52 de la deuxième partie 35 du boîtier 10 est disposé une boite collectrice en forme de bride de fixation 80 permettant de raccorder l'échangeur de chaleur 1 dans l'environnement qui le reçoit, par exemple une culasse de moteur. L'autre flanc 51, 52 reçoit ici une boite collectrice d'entrée et/ou de sortie de la même manière qu'expliqué précédemment mais il pourrait également recevoir une bride 80.

La bride 80 est alors au contact de l'interface défini par le flanc sur lequel elle se situe. Elle est ainsi en contact avec le cadre et l'éventuel collet de ce flanc. Le collet pénètre, de la même manière qu'exposé précédemment que pour les boites collectrices d'entrée et/ou de sortie, dans une ouverture présente au milieu de la bride 80 en correspondance avec l'ouverture du cadre du flanc sur lequel la bride 80. Des oeillets 81 font saillies par rapport audit cadre et sont munis de trous pouvant recevoir un moyen de fixation permettant de fixer l'échangeur à l'intérieur du véhicule.

Avant l'opération de brasage on place ainsi la pluralité de plaques empilées 2 sur le fond 36 de la deuxième partie 35 et la paroi supérieure 13 de la première partie 5 sur la pluralité de plaques empilées 2. Le bords relevé 30 est alors au contact des faces internes 65 des premier et deuxième flanc 51, 52. Lorsque s'effectue l'opération de brasage du boîtier et de la pluralité de plaques empilées, on observe alors un phénomène de foisonnement qui réduit la hauteur de la pluralité de plaques empilées 2 ce qui entraîne un déplacement de la première partie 5 vers le fond 36 de la deuxième partie 35 dans le sens de l'empilement des plaques. La première interface 53 et la deuxième interface 54 ne changent pas de position pendant cette opération de brasage puisqu'elles sont situées sur la deuxième partie 35 du boîtier 10 qui ne se déplace pas pendant le brasage.

Le boîtier et/ou l'empilement de plaques sont réalisées, par exemple, en aluminium et/ou alliage d'aluminium.

## Revendications

1. Boîtier (10) d'échangeur à plaques empilées (1), ledit boîtier (10) définissant un volume destiné à recevoir une pluralité de plaques empilées (2) configurée pour la circulation d'un fluide à refroidir et d'un fluide de refroidissement, ledit boîtier (10) définissant une interface (53, 54) apte à recevoir une boite collectrice (75, 76, 80) du fluide à refroidir et comprenant une première partie (5), apte à se déplacer selon la direction d'empilement des plaques (2) lors d'un brasage des plaques empilées (2), et une deuxième partie (35), lesdites première (5) et deuxième (35) parties étant aptes à être assemblées entre elle lors du brasage des plaques (2), **caractérisé en ce que** la deuxième partie (35) présente au moins un flanc (51,52) définissant ladite interface (53,54).

2. Boîtier (10) selon la revendication 1, dans lequel ladite deuxième partie (35) possède deux dits flancs (51, 52), appelés premier et deuxième flancs (51, 52), l'interface (53, 54) définie par le premier flanc (51), dite première interface (53), étant apte à recevoir une boite collectrice d'entrée (75) du fluide à refroidir et l'interface (53, 54) définie par le deuxième flanc (52), dite deuxième interface (54), étant apte à recevoir une boite collectrice de sortie (76) du fluide à refroidir.

3. Boîtier (10) selon la revendication 1 ou 2, dans lequel la deuxième partie comprend un fond (36) destiné à se trouver en vis-à-vis d'une plaque d'extrémité (37) de la pluralité de plaques empilées (2), le fond (36) et le ou les flancs (51, 52) formant un ensemble unitaire.

4. Boîtier (10) selon l'une quelconque des revendications précédentes, dans lequel ladite interface (53, 54) définit un cadre (55) au milieu duquel se situe une ouverture (57) permettant au fluide à refroidir d'entrer et/ou de sortir du boîtier (10).

5. Boîtier (10) selon la revendication 4, dans lequel le cadre (55) est bordé d'un collet (56) divergent vers l'intérieur du boîtier (10), délimitant l'ouverture (57) et apte à coopérer avec la boite collectrice (75, 76) du fluide à refroidir.

6. Boîtier (10) selon la revendication 5, dans lequel une portion (56') du collet (56) est en contact avec une extrémité latérale (33, 34) du fond (36) de la deuxième partie (35).

7. Boîtier (10) selon l'une quelconque des revendications précédentes, dans lequel la première partie (5) comprend deux parois latérales (11, 12) et une paroi supérieure (13).

8. Boîtier (10) selon la revendication 7, dans lequel la ou les parois latérales (11, 12) et/ou la paroi supérieure (13) possèdent chacune un bord relevé (30), au moins partiellement en contact avec une face (65) du flanc (51, 52) dirigée vers l'intérieur du volume, dite face interne.

9. Boîtier (10) selon la revendication 8, dans lequel le bord relevé (30) de la paroi supérieure (13) relie ensemble les bords relevés (30) des deux parois latérales (11, 12).

10. Boîtier (10) selon l'une quelconque des revendications 7 à 9, dans lequel le fond (36) de la deuxième partie (35) comprend une partie centrale (38) et deux extrémités longitudinales (39, 40) définissant chacune un épaulement (41) par rapport à la partie centrale (38), chaque épaulement (41) permettant à une extrémité distale (21, 26) des parois latérales (11, 12) de la première partie (5) de se trouver dans un plan s'étendant extérieurement au volume défini par le boîtier (10).

11. Echangeur de chaleur à plaques empilées (1) comprenant un boîtier (10) selon l'une quelconque des revendications précédentes et une pluralité de plaques empilées (2) configurée pour la circulation d'un fluide à refroidir et d'un fluide de refroidissement, située dans ledit boîtier (10).

12. Echangeur (1) selon la revendication 11, dans lequel chaque plaque (2) possède une zone d'échange de chaleur (6) destinée à favoriser l'échange de chaleur entre le fluide à refroidir et le fluide de refroidissement, et une zone de contournement (7) susceptible de permettre au fluide à refroidir de contourner la zone d'échange de chaleur (6), une partie du ou desdits flancs relevés formant une ou plusieurs cloisons (70) forçant une circulation du fluide à refroidir dans la zone d'échange.

## Patentansprüche

1. Gehäuse (10) eines Wärmetauschers mit gestapelten Platten (1), wobei das Gehäuse (10) ein Volumen definiert, das dazu bestimmt ist, eine Vielzahl von gestapelten Platten (2) aufzunehmen, die für die Durchströmung eines zu kühlenden Fluids und eines Kühlfluids konfiguriert sind, wobei das Gehäuse (10) eine Schnittstelle (53, 54) definiert, die geeignet ist, einen Sammelkasten (75, 76, 80) des zu kühlenden Fluids aufzunehmen, und umfassend einen ersten Teil (5), der geeignet ist, sich in Stapelrichtung der Platten (2) bei einem Löten der gestapelten Platten (2) zu verschieben, und einen zweiten Teil (35), wobei der erste (5) und der zweite Teil (35) geeignet sind, miteinander beim Löten der Platten (2) verbunden zu werden, **dadurch gekennzeichnet, dass** der zweite Teil (35) mindestens eine Seitenfläche (51, 52) aufweist, die die Schnittstelle (53, 54) definiert.

2. Gehäuse (10) nach Anspruch 1, bei dem der zweite Teil (35) zwei Seitenflächen (51, 52) besitzt, die erste und zweite Seitenflächen (51, 52) genannt werden, wobei die Schnittstelle (53, 54), die von der ersten Seitenfläche (51) definiert ist, erste Schnittstelle (53) genannt, geeignet ist, einen Eingangssammelkasten (75) des zu kühlenden Fluids aufzunehmen, und die Schnittstelle (53, 54), die von der zweiten Seitenfläche (52) definiert ist, zweite Schnittstelle (54) genannt, geeignet ist, einen Ausgangssammelkasten (76) des zu kühlenden Fluids aufzunehmen.

3. Gehäuse (10) nach Anspruch 1 oder 2, bei dem der zweite Teil einen Boden (36) umfasst, der dazu bestimmt ist, sich gegenüber einer der Endplatten (37) der Vielzahl von gestapelten Platten (2) zu befinden, wobei der Boden (36) und die Seitenfläche(n) (51, 52) eine einheitliche Einheit bilden.

4. Gehäuse (10) nach einem der vorhergehenden Ansprüche, bei dem die Schnittstelle (53, 54) einen Rahmen (55) definiert, in dessen Mitte sich eine Öffnung (57) befindet, die es dem zu kühlenden Fluid ermöglicht, in das Gehäuse (10) einzuströmen und/oder aus diesem auszuströmen.

5. Gehäuse (10) nach Anspruch 4, bei dem der Rahmen (55) von einem Kragen (56) umrandet ist, der zum Inneren des Gehäuses (10) divergierend ist und die Öffnung (57) begrenzt und geeignet ist, mit dem Sammelkasten (75, 76) des zu kühlenden Fluids zusammenzuwirken.

6. Gehäuse (10) nach Anspruch 5, bei dem ein Abschnitt (56') des Kragens (56) mit einem seitlichen Ende (33, 34) des Bodens (36) des zweiten Teils (35) in Kontakt ist.

7. Gehäuse (10) nach einem der vorhergehenden Ansprüche, bei dem der erste Teil (5) zwei seitliche Wände (11, 12) und eine obere Wand (13) umfasst.

8. Gehäuse (10) nach Anspruch 7, bei dem die seitliche(n) Wand (Wände) (11, 12) und/oder die obere Wand (13) jeweils einen überhöhten Rand (30) besitzen, der zumindest teilweise mit einer Seite (65) der Seitenfläche (51, 52), die zum Inneren des Volumens gewandt ist, Innenseite genannt, in Kontakt ist.

9. Gehäuse (10) nach Anspruch 8, bei dem der überhöhte Rand (30) der oberen Wand (13) die überhöhten Ränder (30) der beiden seitlichen Wände (11, 12) miteinander verbindet.

10. Gehäuse (10) nach einem der Ansprüche 7 bis 9, bei dem der Boden (36) des zweiten Teils (35) einen zentralen Teil (38) und zwei Längsenden (39, 40) umfasst, die jeweils einen Absatz (41) in Bezug zum zentralen Teil (38) definieren, wobei es jeder Absatz (41) einem distalen Ende (21, 26) der seitlichen Wände (11, 12) des ersten Teils (5) ermöglicht, sich in einer Ebene zu befinden, die sich außerhalb des durch das Gehäuse (10) definierten Volumens erstreckt.

11. Wärmetauscher mit gestapelten Platten (1), umfassend ein Gehäuse (10) nach einem der vorhergehenden Ansprüche und eine Vielzahl von gestapelten Platten (2), die für die Durchströmung eines zu kühlenden Fluids und eines Kühlfluids, das sich in dem Behälter (10) befindet, ausgeführt ist.

12. Wärmetauscher (1) nach Anspruch 11, bei dem jede Platte (2) eine Wärmeaustauschzone (6), die dazu bestimmt ist, den Wärmeaustausch zwischen dem zu kühlenden Fluid und dem Kühlfluid zu begünstigen, und eine Umgehungszone (7) besitzt, die geeignet ist, es dem zu kühlenden Fluid zu ermöglichen, die Wärmeaustauschzone (6) zu umgehen, wobei ein Teil der überhöhten Seitenfläche(n) eine oder mehrere Trennwände (70) bildet, die eine Durchströmung des zu kühlenden Fluids in der Wärmeaustauschzone forcieren.

## Claims

1. Housing (10) of a stacked-plate heat exchanger (1), the said housing (10) defining a volume intended to accept a plurality of stacked plates (2) which plurality is configured for the circulation of a fluid that is to be cooled and of a coolant, the said housing (10) defining an interface (53, 54) able to accept a header tank (75, 76, 80) for the fluid that is to be cooled and comprising a first part (5) able to move in the direction in which the plates (2) are stacked when the stacked plates (2) are being brazed, and a second part (35), the said first (5) and second (35) parts being able to be assembled with one another when the plates (2) are being brazed, **characterized in that** the second part (35) has at least one flank (51, 52) defining the said interface (53, 54).

2. Housing (10) according to Claim 1, in which the said second part (35) has two said flanks (51, 52), referred to as the first and second flanks (51, 52), the interface (53, 54) defined by the first flank (51), known as the first interface (53), being able to accept an inlet header tank (75) for the fluid that is to be cooled and the interface (53, 54) defined by the second flank (52), known as the second interface (54), being able to accept an outlet header tank (76) for the fluid that is to be cooled.

3. Housing (10) according to Claim 1 or 2, in which the second part comprises a bottom (36) intended to lie facing an end plate (37) of the plurality of stacked plates (2), the bottom (36) and the flank or flanks (51, 52) forming a unit assembly.

4. Housing (10) according to any one of the preceding claims, in which the said interface (53, 54) defines a surround (55) in the middle of which there is an opening (57) allowing the fluid that is to be cooled to enter and/or leave the housing (10).

5. Housing (10) according to Claim 4, in which the surround (55) is bordered by a collar (56) diverging towards the inside of the housing (10), delimiting the opening (57) and able to collaborate with the header tank (75, 76) for the fluid that is to be cooled.

6. Housing (10) according to Claim 5, in which a portion (56') of the collar (56) is in contact with a lateral end (33, 34) of the bottom (36) of the second part (35).

7. Housing (10) according to any one of the preceding claims, in which the first part (5) comprises two laterals walls (11, 12) and a top wall (13).

8. Housing (10) according to Claim 7, in which the lateral wall or walls (11, 12) and/or the top wall (13) each have a turned-up edge (30), at least partially in contact with one face (65) of the flank (51, 52) which face faces towards the inside of the volume and is known as the internal face.

9. Housing (10) according to Claim 8, in which the turned-up edge (30) of the top wall (13) joins together the turned-up edges (30) of the two lateral walls (11, 12).

10. Housing (10) according to any one of Claims 7 to 9, in which the bottom (36) of the second part (35) comprises a central part (38) and two longitudinal ends (39, 40) each one defining a shoulder (41) with respect to the central part (38), each shoulder (41) allowing a distal end (21, 26) of the lateral walls (11, 12) of the first part (5) to lie in a plane running externally to the volume defined by the housing (10).

11. Stacked-plates heat exchanger (1) comprising a housing (10) according to any one of the preceding claims and a plurality of stacked plates (2) which plurality is configured for the circulation of a fluid that is to be cooled and of a coolant, and is situated inside the said housing (10).

12. Exchanger (1) according to Claim 11, in which each plate (2) has a heat exchange zone (6) intended to encourage the exchange of heat between the fluid that is to be cooled and the coolant, and a bypass zone (7) able to allow the fluid that is to be cooled to bypass the heat exchange zone (6), part of the said turned-up flank or flanks forming one or more baffles (70) that force the fluid that is to be cooled to circulate through the exchange zone.
